# EUROPÄISCHE PATENTSCHRIFT

(11) **EP 2 546 177 B1**
(45) Veröffentlichungstag und Bekanntmachung des Hinweises auf die Patenterteilung: **02.09.2015**
(21) Anmeldenummer: 12174959.2
(22) Anmeldetag: 04.07.2012
(51) Int. Cl.: B65H 7/14, B65H 9/10, B65H 29/24, G06T 7/00, B65H 43/08, B65H 43/04

(54) **Verfahren und Vorrichtung zur Qualitätsprüfung flächiger Druckprodukte**
Method and device for quality assurance of flat printed products
Procédé et dispositif destinés au contrôle de la qualité de produits d'impression plats

(30) Priorität: 13.07.2011 CH 11932011
(43) Veröffentlichungstag der Anmeldung: 16.01.2013
(73) Patentinhaber: Müller Martini Holding AG, 6052 Hergiswil (CH)
(72) Erfinder: Duss, Hanspeter, 5033 Buchs (CH); Gysin, Christoph, 4466 Ormalingen (CH)

(56) Entgegenhaltungen:
- EP-A1- 2 026 279
- WO-A1-2009/140779
- WO-A1-2010/009561
- US-A- 6 072 899

## Beschreibung

Die Erfindung betrifft ein Verfahren zur Qualitätsprüfung eines flächigen Druckprodukts, eine Vorrichtung zur Durchführung des Verfahrens und eine Tragelement, welches insbesondere bei der erfindungsgemässen Vorrichtung zum Einsatz kommt, gemäss dem jeweiligen Oberbegriff der unabhängigen Ansprüche.

Aus der WO2009/140779 A1 ist ein optisches Kontrollverfahren zur Druckweiterverarbeitung bekannt. Dabei werden flächige Druckprodukte mit einem Fördermittel entlang einer Förderstrecke an mindestens einem Bildaufzeichnungsmittel vorbeigeführt, welches Bilder von Druckprodukten und zumindest einen Ausschnitt des Fördermittels erfasst. Diese jeweils Istwerte darstellenden Bilder werden in einer Auswerteeinheit mit Sollwerten verglichen, wobei Unregelmässigkeiten des Fördermittels erkannt und entsprechende Signale generiert werden. Bei einer weiteren Bildbearbeitung gemäss der WO2009/140779 A1 werden Ränder eines auf dem Fördermittel liegenden Druckprodukts ermittelt, indem das Fördermittel mit dem Druckprodukt zweischen einem optischen Sensor und einem Leuchtmittel geführt werden. Die Druckprodukte liegen auf Auflageflächen mit regelmässigen Perforationen, welche lichtdurchlässig sind. Aufgrund einer einseitigen Beleuchtung werden Schattenbilder auf der anderen Seite des Fördermittels erzeugt, welche von der Bilderfassungseinheit aufgenommen werden. Dadurch sind die Konturen der Druckprodukte und eventuelle Unregelmässigkeiten der Förderstrecke, wie z.B. Verunreinigungen, im vom Druckprodukt nicht abgedeckten Teil der Auflagefläche erfassbar.

Aus der WO2009/140778 A1 ist eine optische Positionserkennung bekannt. Bei dieser Lösung werden wie bei der WO2009/140779 A1 Druckprodukte auf einem Fördermittel zwischen einer oder mehreren Lichtquellen und einer Bilderfassungseinheit geführt. Dabei werden die Konturen der Druckprodukte ermittelt, wobei verschiedene Algorithmen zur Auswertung der aufgenommenen Bilder zur Anwendung kommen.

Das Verfahren bzw. die Vorrichtung zur Positionserkennung und deren Anwendung in der Druckweiterverarbeitung erlauben zwar die Detektierung der Position eines Druckproduktes auf dem Fördermittel und damit auch eine automatische Detektierung von Fehlplatzierungen bzw. von fehlerhaften Konturen eines Druckprodukts, insbesondere auch beispielsweise Verunreinigungen der Förderstrecke, jedoch ist es damit nicht möglich, Fehler bzw. Unregelmässigkeiten in der Beschaffenheit des Druckprodukts selbst zu erkennen, da die Fläche des Druckprodukts für die Bilderfassungseinheit unsichtbar ist.

Es ist Aufgabe der vorliegenden Erfindung, ein Verfahren und eine Vorrichtung bereitzustellen, welche ein selbständiges Erkennen von Unregelmässigkeiten eines flächigen Druckprodukts gewährleistet und somit die Qualitätsprüfung bei der Herstellung des Druckprodukts zu verbessern. Eine weitere Aufgabe der Erfindung ist es, eine flexible Infrastruktur für die Zu- bzw. Abführung eines Druckprodukts, insbesondere für eine solche Vorrichtung, bereitzustellen.

Die erste Aufgabe wird mit einem erfindungsgemässen Verfahren zur Qualitälsprüfung eines flächigen Druckprodukts gelöst. Bei dem Verfahren wird das Druckprodukt zunächst auf ein Tragelement verbracht, wonach das Druckprodukt sowie das Tragelement von mindestens einer Lichtquelle beleuchtet werden. Danach erfolgt durch mindestens ein Bildaufzeichnungsmittel eine Aufnahme mindestens eines mindestens ein Strukturelement des Druckprodukts aufweisenden Bildes des beleuchteten Druckprodukts. Anschliessend wird in einer Auswerteeinheit aus dem mindestens einen Strukturelement mindestens ein Geometrieobjekt des Druckprodukts ermittelt und Istwerte des mindestens einen Geometrieobjekts werden mit vorgegebenen Sollwerten für dieses Geometrieobjekt verglichen. Schliesslich wird das Vergleichsergebnis zur Steuerung einer Weiterverarbeitung des Druckprodükts verwendet. Dabei wird zusätzlich zu dem mindestens einen Strukturelement des Druckprodukts auch mindestens ein Strukturelement des Tragelements aufgenommen und aus dem mindestens einen Strukturelement des Tragelements ein Geometrieobjekt des Tragelements ermittelt. Danach werden Istwerte des mindestens einen Geometrieobjekts des Tragelements mit vorgegebenen Sollwerten für dieses Geometrieobjekt verglichen. Schliesslich wird das Vergleichsergebnis zur Steuerung einer Weiterverarbeitung des Druckprodukts verwendet.

Besonders vorteilhaft werden die aus den Strukturelementen des Druckprodukts und aus den Strukturelementen des Tragelements ermittelten Geometrieobjekte zueinander in Verbindung gesetzt und ein Ist-Winkel der Geometrieobjekte zueinander und/oder ein Ist-Abstand der Geometrieobjekte voneinander ermittelt. Danach wird der ermittelte Ist-Winkel und/oder Ist-Abstand mit einem vorgegebenen Soll-Winkel und/oder Soll-Abstand verglichen wird und schliesslich das Vergleichsergebnis zur Steuerung der Weiterverarbeitung des Druckprodukts verwendet.

Weiter wird die erste Aufgabe mit einer Vorrichtung zur Qualitätsprüfung eines flächigen Druckprodukts mittels des erfindungsgemässen Verfahrens gelöst. Die Vorrichtung umfasst ein Tragelement für das Druckprodukt, mindestens eine Lichtquelle, mindestens ein Bildaufzeichnungsmittel und eine Auswerteeinheit. Das mindestens eine Bildaufzeichnungsmittel und die Auswerteeinheit sind zusätzlich zum Aufnehmen, Identifizieren und Auswerten zumindest einen Strukturelements des Druckprodukts auch zum Aufnehmen mindestens eines Strukturelements des Tragelements, zur Ermittlung eines Geometrieobjekts aus dem mindestens einen Strukturelement des Tragelements, zum Vergleichen von Istwerte des mindestens einen Geometrieobjekts mit vorgegebenen Sollwerten für dieses Geometrieobjekt und schliesslich zum Verwenden des Vergleichsergebnisses zur Steuerung einer Weiterverarbeitung des Druckprodukts ausgestaltet.

Zur Lösung der zweiten Aufgabe wird ein Tragelement zum Zuführen und Abführen eines auf seine Qualität zu prüfenden Druckprodukts bereitgestellt. Das Tragelement umfasst ein Transportelement mit einer dem Druckprodukt zugewandten Auflagefläche mit luftdurchlässigen Öffnungen, eine mit den Öffnungen in luftdurchlässiger Verbindung stehende Blaslufteinheit, eine mit den Öffnungen in luftdurchlässiger Verbindung stehende Luftansaugeinheit und ein mittels angetriebenen Rollen drehbares Führungsband. Die Rollen und das Führungsband sind in einem veränderbaren Abstand über den Öffnungen angeordnet.

Das Verfahren, die Vorrichtung zur Durchführung des Verfahrens schaffen die Möglichkeit, Druckprodukte hinsichtlich ihrer Qualität zu prüfen, wobei vielfältige Untersuchungsmöglichkeiten bereitstehen, welche auf der Auswertung von aus Strukturelementen des Druckprodukts und des Tragelements ermittelten Geometrieobjekten basieren. Ferner kann das zu prüfende Druckprodukt mittels des Tragelements optimal für eine bevorstehende Qualitätsprüfung positioniert werden, so dass diese nicht durch falsche Positionierung beeinflusst wird.

Ausgewählte Ausführungsformen der Erfindung ergeben sich aus den abhängigen Ansprüchen und werden in der nachfolgenden Beschreibung mit Hilfe der im Folgenden beschriebenen Figuren und Beispiele detailliert erläutert. Dabei zeigen:
- Fig. 1: eine perspektivische Ansicht einer erfindungsgemässen Vorrichtung,
- Fig. 2: eine Draufsicht auf einen auf einem Tragelement angeordneten Duckprodukt,
- Fig. 3: eine Draufsicht eines Ausschnitts in einem Kantenbereich des Tragelements mit einem Teil des Druckprodukts,
- Fig. 4: eine Seitenansicht der zur Ermittlung eines Schattenprofils verwendeten Bauteile der Vorrichtung,
- Fig. 5: eine Draufsicht auf ein erfindungsgemässes Tragelement,
- Fig. 6: eine Seitenansicht des erfindungsgemässen Tragelements.

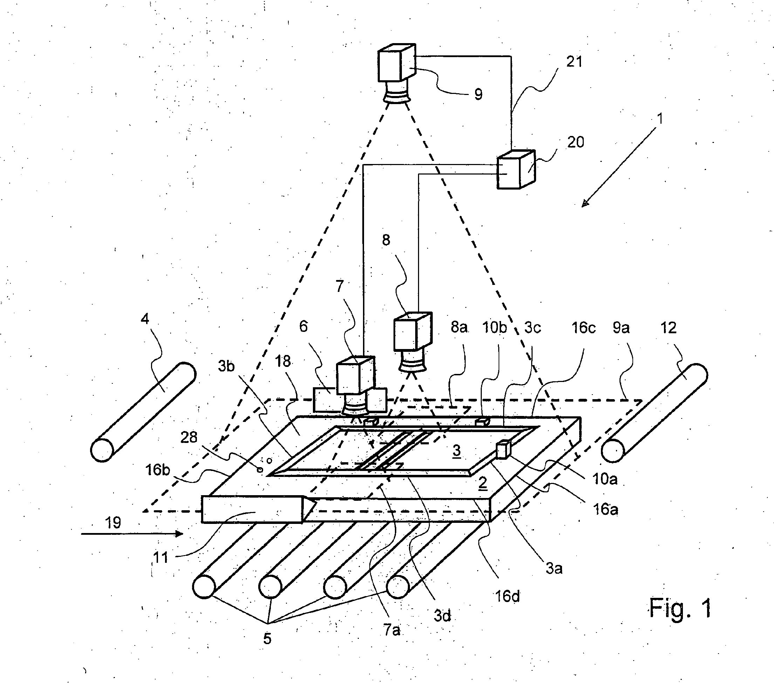

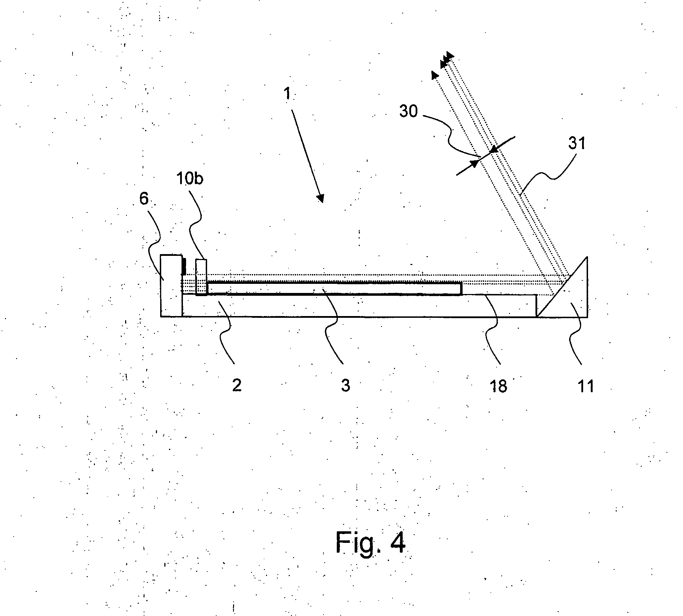

Fig. 1 zeigt eine perspektivische Ansicht einer erfindungsgemässen Vorrichtung 1. Die Vorrichtung 1 umfasst ein Tragelement 2, welches als Förderelement und/oder als Saugtisch ausgebildet sein kann und eine Auflagefläche 18 für ein flächiges, vier Ränder 3a, 3b, 3c, 3d aufweisendes Druckprodukt 3 besitzt, das in diesem Fall eine Buchdecke ist. Natürlich können der Vorrichtung 1 auch andere flächige Druckprodukte 3, wie z.B. ein Druckbogen oder ein Stapel von Druckbogen in einer Transportrichtung 19 zugeführt werden. Ferner sind eine Anzahl von Lichtquellen 4, 5, 6, 12 vorgesehen. Weiter umfasst die Vorrichtung 1 ein erstes, ein zweites und ein drittes Bildaufzeichnungsmittel 7, 8, 9, vorzugsweise Photokameras, und eine mit den Bildaufzeichnungsmitteln 7, 8, 9 verbundene Auswerteeinheit 20. Ferner ist an einer Kante des Tragelements 2 ein Spiegel 11 angeordnet, dessen Funktion im Zusammenhang mit Fig. 4 näher erläutert wird.

Gemäss einer vorteilhaften Ausgestaltung der Vorrichtung 1 kann diese zumindest einen ersten und zumindest einen zweiten, jeweils am Tragelement 2 angeordneten Anschlag 10a, 10b umfassen. Vorteilhaft sind jeweils mehrere erste sowie mehrere zweite Anschläge 10a, 10b ausgebildet, wobei in Figur 1 aus Gründen der Übersichtlichkeit lediglich ein erster und zwei zweite Anschläge 10a, 10b dargestellt sind.

Der erste Anschlag 10a ist im Bereich einer ersten Kante 16a des Tragelements 2 angeordnet, wobei die erste Kante 16a einer zweiten Kante 16b des Tragelements 2 gegenüberliegend angeordnet ist, welche das Druckprodukt 3 bei seiner Ankunft auf dem Tragelement 2 zuerst passiert. Mit anderen Worten begrenzt der erste Anschlag 10a die Bewegung des Druckprodukts 3 in Transportrichtung 19. Die zweiten Anschläge 10b sind im Bereich einer der ersten und der zweiten Kante 16a, 16b benachbarten dritten Kante 16c des Tragelements 2 angeordnet. Dabei ist die dritte Kannte 16c bei einer von einer horizontalen Ebene abweichenden Schräglage des Tragelements 2 diejenige, welche sich in Richtung des sich infolge seiner Gewichtskraft auf der Auflagefläche 18 bewegenden Druckprodukts 3 befindet. Mit anderen Worten kann das Tragelement 2 auch schräg gelagert sein. In diesem Fall sind die zweiten Anschläge 10b im Bereich der im Wesentlichen parallel zur Transportrichtung 19 verlaufenden dritten Kante 16c des Tragelements 2 angeordnet, wobei diese dritte Kante 16c tiefer angeordnet ist als einer dieser gegenüberliegende vierte Kante 16d des Tragelements 2. Kommt das Druckprodukt 3 in Transportrichtung 19 auf dem Tragelement 2 an, so rutscht es in Richtung der Anschläge 10a, 10b und wird dort automatisch ausgerichtet.

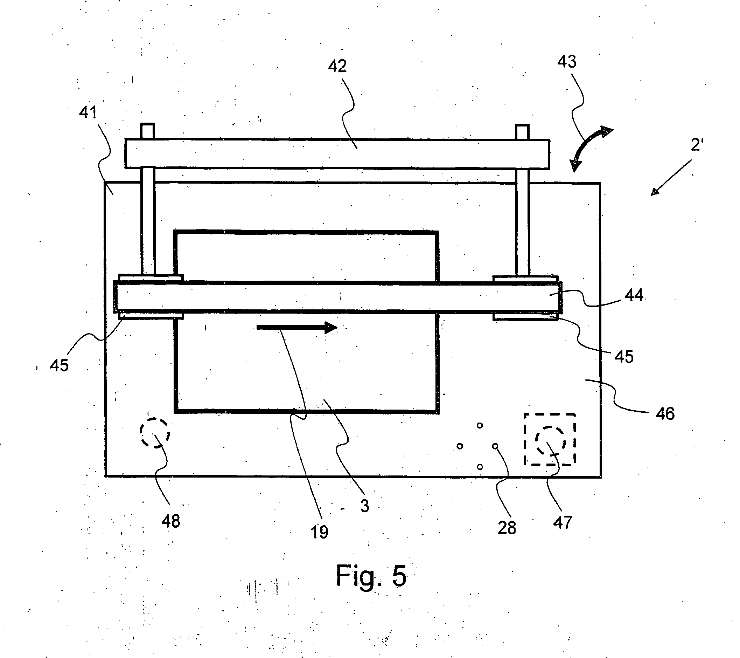

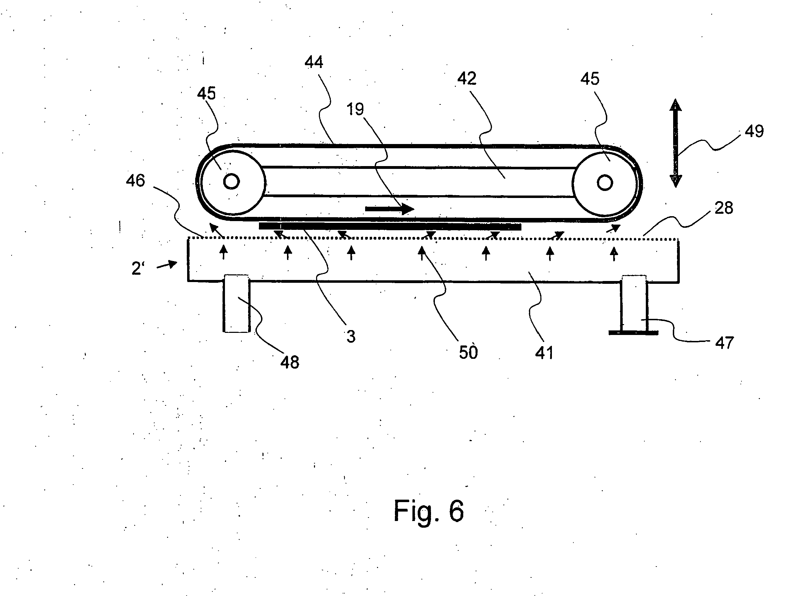

Sobald das Druckprodukt 3 derart auf dem Tragelement 2 aufliegt, dass keiner seiner Ränder 3a, 3b, 3c, 3d über das Tragelement 2 hinausragt, wird es dadurch fixiert, dass es an das Tragelement 2 angesaugt wird. Dazu ist das Tragelement 2 mit Öffnungen 28 versehen, welche wiederum an einer hier nicht gezeigten Luftansaugeinheit angeschlossen sind. Dies wird jedoch im Zusammenhang mit den Fig. 5 und 6 näher erläutert.

Nach einer durch die jeweiligen Bildaufzeichnungsmittel 7, 8, 9 erfolgten Aufnahme von Bildern 7a, 8a, 9a des Druckprodukts 3 und des Tragelements 2 werden die Anschläge 10a und 10b bei Bedarf entsprechend der Richtung des beabsichtigten Weitertransports des Druckprodukts 3 versenkt oder abgehoben. Beispielsweise wird der erste Anschlag 10a versenkt oder abgehoben, wenn die Richtung des Weitertransports identisch mit der Transportrichtung 19 ist. Liegt das Tragelement 2 in einer horizontalen Ebene, so ist es unerheblich, ob der zweite Anschlag 10b im Bereich der dritten oder der vierten Kante 16c, 16d des Tragelements 2 angeordnet ist.

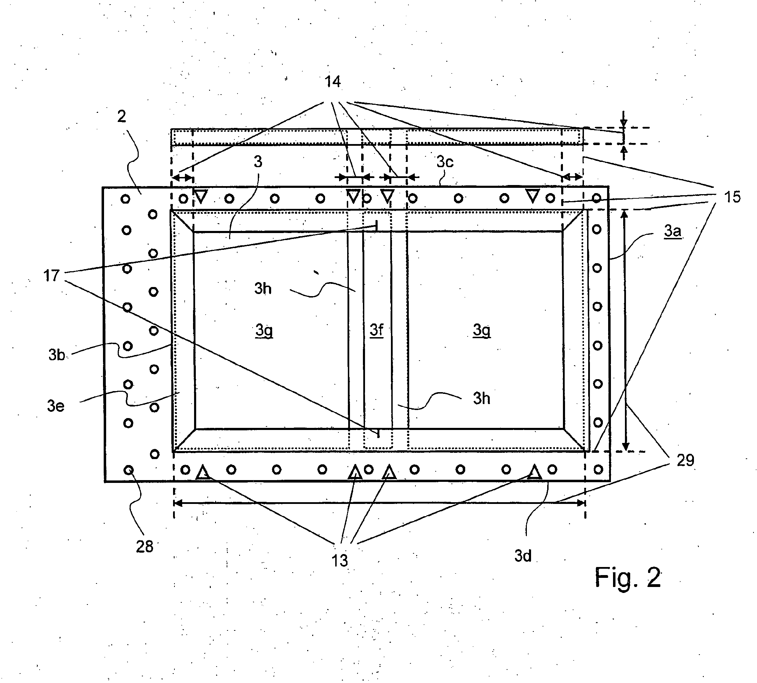

Die in Fig. 1 gezeigten Lichtquellen 4, 5, 6, 12 dienen zur Beleuchtung des Druckprodukts 3 und des Tragelements 2, um einerseits ausreichend belichtete Bilder 7a, 8a, 9a der Oberfläche des Druckprodukts 3 und des Tragelements 2 zu ermöglichen und andererseits um bestimmte Effekte zu erzeugen, welche bei der Bildauswertung zum Tragen kommen. Auf diese Effekte wird bei der Erläuterung des Verfahrens und der Bildaufnahmetypen im Zusammenhang mit Fig. 2 bis 4 näher eingegangen. Selbstverständlich können auch weniger Lichtquellen vorgesehen sein, wenn nur ein bestimmter Aufnahmetyp gewünscht ist. Sind mehrerer Lichtquellen 4, 5, 6, 12 vorhandeln, so können diese entweder einzeln oder in beliebiger Kombination verwendet werden. Dies schliesst auch einen mehrmals aufeinanderfolgenden Einsatz einzelner Lichtquellen für die Beleuchtung aufeinander folgender Aufnahmen des gleichen Druckprodukts 3 ein.

Beispielsweise kann die erste Lichtquelle 4 zur Aufnahme jeweils eines Bildes 7a, 9a mit dem ersten und zweiten Bildaufzeichnungsmittel 7, 9 eingeschaltet werden Nach Abschalten der ersten Lichtquelle 4 kann die vierte Lichtquelle 12 eingeschaltet werden und es kann anschliessend jeweils ein weiteres Bild 7a, 9a mittels der Bildaufzeichnungsmittel 7, 9 aufgenommen werden, um weitere Informationen zur Auswertung zu erhalten.

Bezogen auf die Ebene der Auflagefläche 18 des Druckprodukts 3 auf dem Tragelement 2 sind die erste Lichtquelle 4 sowie mindestens das erste Bildaufzeichnungsmittel 7 auf der gleichen Seite des Tragelements 2 angeordnet. Im vorliegenden Beispiel sind die anderen Bildaufzeichnungsmittel 8, 9 auch auf derselben Seite des Tragelements 2 angeordnet. Die zweite, in diesem bevorzugten Fall aus vier im wesentlichen parallel zueinander positionierten Lichtröhren bestehende Lichtquelle 5 ist auf einer Seite des Tragelements 2 angeordnet, welche der Seite des Tragelements 2 auf der die erste Lichtquelle 4 angeordnet ist, gegenüberliegt. Bei der vorliegenden Anordnung, bei der die erste Lichtquelle 4 oberhalb der Ebene der Auflagefläche 18 angeordnet ist, bedeutet dies, dass die zweite Lichtquelle 5 unterhalb der Ebene der Auflagefläche 18 des Tragelements 2 angeordnet ist. Dabei ist das Tragelement 2 transparent ausgebildet und kann eine Lichtdiffusor-Schicht aufweisen. Natürlich kann die zweite Lichtquelle 5 auch innerhalb des Tragelements 2 angeordnet sein. Mindestens die dritte Lichtquelle 6 ist, bezogen auf die Ebene der Auflagefläche 18, auf derselben Seite der ersten Lichtquelle 4 und in einer Ebene rechtwinklig zur Ebene der Auflagefläche 18 des Druckprodukts 3 angeordnet. Alternativ zu der in Fig. 1 gezeigten, relativ kompakten dritten Lichtquelle 6, kann diese auch etwa so lang wie die dritte Kante 16c des Tragelements 2 ausgebildet sein. Wie schon beschrieben, werden die Lichtquellen 4, 5, 6, 12 für verschiedene Beleuchtungsalternativen zur Aufnahme von Bildern 7a, 8a, 9a mit den Bildaufzeichnungsmitteln 7, 8, 9 verwendet.

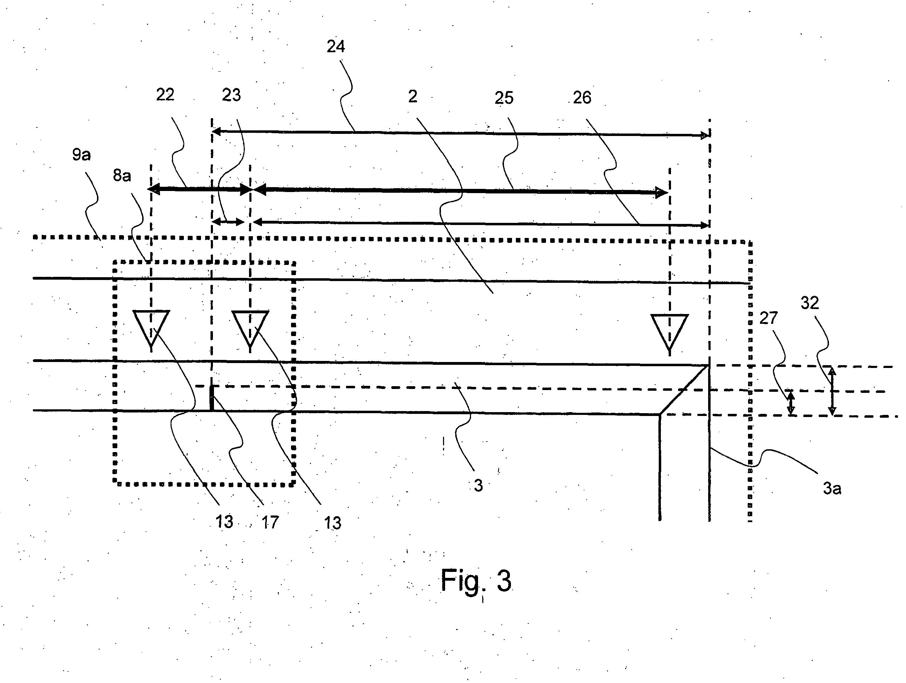

Mindestens zwei der drei Bildaufzeichnungsmittel 7, 8, 9, in diesem Beispiel handelt es sich dabei um das erste und das zweite Bildaufzeichnungsmittel 7, 8, sind dazu vorgesehen, jeweils Bilder 7a, 8a von Ausschnitten des Druckprodukts 3 und des Tragelements 2 aufzunehmen. Das dritte Bildaufzeichnungsmittel 9 ist dazu vorgesehen, Bilder 9a des gesamten Druckprodukts 3 und mindestens eines Teils des Tragelements 2 aufzunehmen. Die mit den Bildaufzeichnungsmitteln 7, 8, 9 zur Datenübertragung verbundene Auswerteeinheit 20 ist derart ausgestaltet, dass sie die Bilder 7a, 8a, 9a über Signalleitungen 21 oder alternativ auch kabellos empfängt und diese Bilder 7a, 8a, 9a auswertet. Die empfangenen Bilder 7a, 8a, 9a entsprechen den in den Fig. 1 und 3 mit gestrichelten Linien dargestellten Bereichen, d.h. das erste Bildaufzeichnungsmittel 7 nimmt Bilder 7a, das zweite Bildaufzeichnungsmittel 8 nimmt Bilder 8a und das dritte Bildaufzeichnungsmittel 9 nimmt Bilder 9a auf.

Nach der Beschreibung der wichtigsten Elemente der Vorrichtung 1 wird nun im Zusammenhang mit Fig. 2 auf Markierungen und Layout des Tragelements 2 sowie des hier als Buchdecke ausgebildeten Druckprodukts 3 eingegangen.

Fig. 2 zeigt eine Draufsicht eines auf dem Tragelement 2 angeordneten, als vierteilige Buchdecke ausgebildeten Druckprodukts 3. Die Buchdecke weist einen eingeschlagenen Umschlag 3e sowie drei Pappteile auf, wobei letztere durch teilweise gepunktete Rechtecke innerhalb des Umschlags 3e dargestellt sind. Dabei bildet das schmale, mittlere Pappteil eine Rückeneinlage 3f und die beiden grossen, äusseren Pappteile jeweils eine Deckenpappe 3g der Buchdecke. Die zwischen der Rückeneinlage 3f und den Deckenpappen 3g gezeigten Bereiche sind durch den Umschlag 3e der Buchdecke gebildet. Diese Bereiche sind Beispiele für Strukturelemente der Buchdecke, d.h. Beispiele für Strukturelemente 3h eines Druckprodukts 3. Allgemein zeichnen sich Strukturelemente im Sinne der Erfindung durch erhöhte oder abgesenkte Bereiche des Druckprodukts 3 aus. Sie können aber auch durch ein aufgebrachtes Druckbild, wie beispielsweise eine Markierung, durch Kanten des Druckprodukts, welche auch dessen Ränder umfassen, durch Unebenheiten des Materials des Druckprodukts 3 oder durch Farbspritzer, Verschmutzungen, usw. gebildet sein. In diesem Zusammenhang bedeutet der Begriff "Schattenwurf" in Sinne der vorliegenden Erfindung durch Lichteinfall, aufgrund der Beleuchtung mittels der ersten und/oder der vierten Lichtquelle 4, 12 entstehende Schattenbereiche auf der Oberfläche des Druckprodukts 3, die eben durch solche Strukturelemente hervorgerufen werden. Es wird angemerkt, dass eine seitliche Anordnung der ersten und der vierten Lichtquelle 4, 12 bevorzugt ist, d.h. ein Anordnung bei der eine ausgehend von den Lichtquellen 4 bzw. 12 in Lotrichtung verlaufende Gerade nicht auf das Druckprodukt 3 trifft. Mit dieser seitlichen Anordnung der Lichtquellen 4, 12 ist sichergestellt, dass bei der Beleuchtung alle Strukturelemente der Oberfläche des Druckprodukts 3 einen Schattenwurf erhalten. Ferner weist das Tragelement 2 mindestens eine ein weiteres Strukturelement 13 darstellende Markierung auf, deren Form und Position auf dem Tragelement 2 in der Auswerteeinheit 20 gespeichert sind. Im vorliegenden Beispiel sind vier Markierungen am Tragelement 2 vorgesehen. Die Markierungen des Tragelements 2 können Aufdrucke, d.h. zweidimensionale Strukturelemente 13 oder auch dreidimensionale Strukturelemente mit bekannter Geometrie sein. Ferner sind in Fig. 2 Markierungen auf dem Druckprodukt 3 ersichtlich welche weitere Strukturelemente 17 darstellen. In diesem Beispiel zeigen diese Strukturelemente 17 die Mitte des Druckprodukts 3 an, im hier beschriebenen Ausführungsbeispiel also die Mitte der Buchdecke. Die Lage der Strukturelemente 17 lässt sich absolut bestimmen, indem zunächst ihre zu den Strukturelementen 13 des Tragelements 2 relative Lage bestimmt wird und diese relative Lage unter Einbeziehung der absoluten Lage der Strukturelemente 13 des Tagelements 2 in eine absolute Lage umgerechnet werden. Daraus können beispielsweise eine Zentrierung des Druckbildes und ein Verdrehungswinkel der Ränder 3a, 3b, 3c, 3d des Druckprodukts 3 gegenüber dessen Aufdruck bestimmt werden. Dies wird im Zusammenhang mit Fig. 3 näher erläutert.

Fig. 2 zeigt auch Strukturelemente 15, welche Aufdrucke, Ränder von Erhöhungen oder Vertiefungen und Höhenunterschiede des Druckprodukts 3 oder Höhenunterschiede zwischen dem Tragelement 2 und dem Druckprodukt 3 sein können. Speziell werden Umrisse eines Schattenwurfs, eventuell auch approximierte Umrisse, ebenfalls als Strukturelemente interpretiert. Die Strukturelemente 15 sind durch ihre geometrischen Masse definiert, welche beispielsweise Längen, Winkel, Abstände zwischen zwei Strukturelementen 15 oder Winkel eines Strukturelements 15 zu einem anderen Strukturelement 15 sein können. Solche zwei- oder dreidimensionalen Strukturelemente des Druckprodukts 3 und des Tragelements 2 sind in den von den Bildaufzeichnungsmitteln 7, 8, 9 aufgenommenen Bildern 7a, 8a, 9a als zweidimensionale Geometrieobjekte sichtbar. Dabei stellen die Markierungen auf dem Druckprodukt 3 und/oder auf dem Tragelement 2 und/oder die Strukturelemente 15 und/oder Abstände 14, 29 bzw. Winkel zwischen Strukturelementen 15 für sich allein oder in ihrer Kombination Hilfsmittel dar, um die entsprechenden Bilder 7a, 8a, 9a, d.h. deren Geometrieobjekte in der Auswerteeinheit 20 zu deuten.

In Fig. 2 sind ferner auch die Öffnungen 28 des Tragelements 2 zum Einblasen oder Ansaugen von Luft dargestellt. Wie bereits erwähnt, können diese Öffnungen 28 beispielsweise zur Fixierung des Druckprodukts 3 auf dem Tragelement 2 dienen. Alternativ können dazu auch andere dem Fachmann bekannten Mittel in Frage kommen, wie z. B. eine Fixierung mittels einer transparenten Platte, etwa wie in Museen, bei der Fixierung von Gemälden hinter Glas.

Fig. 3 zeigt eine Draufsicht auf einen Kantenbereich des Tragelements 2 und auf einen Teil des auf dem Tragelement 2 befindlichen Druckprodukts 3. Gleichfalls sind die jeweils in Form von Markierungen auf dem Tragelement 2 und auf dem Druckprodukt 3 aufgebrachten Strukturelemente 13, 17 zumindest teilweise sichtbar. Die gestrichelten Linien stellen die aus Fig. 1 bekannten Bilder 8a und 9a des zweiten bzw. des dritten Bildaufzeichnungsmittels 8, 9 dar. Die Bilder 8a, 9a unterscheiden sich voneinander und überschneiden sich derart, dass ein und dasselbe als Markierung ausgebildete Strukturelement 13 des Tragelements 2 auf jedem der beiden Bilder 8a, 9a sichtbar ist. Insbesondere können die Bilder dieser oder auch einer anderen Konstellation von Bildaufzeichnungsmitteln mindestens gemeinsam das vollständige Druckprodukt 3 abbilden. Weiter sind in Fig. 3 verschiedene Abstände durch Doppelpfeile dargestellt, auf die im Folgenden eingegangen wird. Die fett markierten Doppelpfeile 22 und 25 beschreiben Abstände zwischen den als Markierungen ausgebildeten Strukturelementen 13 des Tragelements 2, deren absolute Lage bekannt ist. Bei einem beispielhaften Prüfungsschritt des Druckprodukts 3 gilt es, anderen Abstände 23, 24, 26, 27, 32 welche der Auswerteeinheit 20 unbekannt sind, zu ermitteln. Dabei ergibt der Abstand 23 addiert mit dem Abstand 26 den Abstand 24, welcher den Abstand des als Markierung ausgebildeten Strukturelements 17 des Druckprodukts 3 von dessen Rand 3a widerspiegelt und welcher Aufschluss über eine richtige oder falsche Zentrierung des Druckprodukts 3 gibt. Analog wird diese Ermittlung auch für den dem Rand 3a gegenüberliegenden Rand 3b des Druckprodukts 3 durchgeführt.

Zur Ermittlung des Abstands 24 wird jeweils ein Bild 8a, 9a mit dem Bildaufzeichnungsmittel 8 bzw. 9 aufgenommen. Dabei wird mindestens ein auf dem Tragelement 2 befindliches, als Markierung ausgebildetes Strukturelement 13 mittels jedes Bildaufzeichnungsmittels 8, 9 aufgenommen und in Form eines Geometrieobjekts an die Auswerteeinheit 20 übermittelt. Anschliessend wird in der Auswerteeinheit 20 mittels eines Vergleichs von aufgenommenen Abmessungen und aufgenommener Position mit absoluten Sollwerten dieses Strukturelements 13 ein Vergrösserungs- und Verzerrungsfaktor der Bildaufzeichnungsmittel 8, 9 ermittelt. Insbesondere ist die Markierung in den Bildern 8a, 9a des beleuchteten Druckprodukts 3 enthalten. Mit anderen Worten findet in diesem Schritt eine Art von Kalibrierung der Bildaufzeichnungsmittel 8, 9 statt. Dies kann mittels separater Bilder 7a, 8a, 9a geschehen oder in der zu verwertenden Aufnahme des Bildes 9a bzw. eines Abschnitts des Bildes 8a integriert werden, wobei letzteres bevorzugt ist. Dies hat den zentralen Vorteil, dass bei jedem zu überprüfenden Bild 7a, 8a, 9a eines Druckprodukts 3 gleichzeitig mit der Aufnahme des zu untersuchenden Bildes 7a, 8a, 9a eine Kalibrierung stattfindet. Dadurch ist es möglich, sehr akkurate Auswertungen durchzuführen, da bei jedem Bild 8a, 9a Parameter und Lage der Bildaufzeichnungsmittel, welche sich beispielsweise aufgrund von Hitze oder Vibrationen verändern können, berücksichtigt werden. Unter Berücksichtigung des Vergrösserungs- und Verzerrungsfaktors werden Istwerte von Abmessungen und Position der Strukturelemente 15 bestimmt. Im vorliegenden Beispiel kann durch Auswertung des Bildes 9a des Bildaufzeichnungsmittels 9 unter Berücksichtigung der genannten Vergrösserungs- und Verzerrungsfaktoren der absolute Abstand 26 zwischen einem als Markierung ausgebildeten Strukturelement 13 des Tragelements 2 und dem Rand 3a des Druckprodukts 3 aus dem korrespondierenden Bildabstand ermittelt werden. Entsprechend kann aus dem Bild 8a des Bildaufzeichnungsmittels 8 der absolute Abstand 23 zwischen einem als Markierung ausgebildeten Strukturelement 13 des Tragelements 2 und einem als Markierung ausgebildeten Strukturelement 17 des Druckprodukts 3 ermittelt werden. Die Addition dieser Abstände ergibt wie erwähnt den gesuchten absoluten Abstand 24 zwischen dem Rand 3a des Druckprodukts 3 und dessen als Markierung ausgebildeten Strukturelement 17. Daraus kann die Auswerteeinheit 20 auf der Basis bekannter, vorgegebener Soll-Abstände ermitteln, ob das Druckprodukt 3 richtig zentriert ist. Es können also mindestens zwei Bilder 8a, 9a des Druckprodukts 3 sowie des Tragelements 2 mit mindestens zwei unterschiedlichen Bildaufzeichnungsmitteln 8, 9 aufgenommen werden, wobei mindestens ein und dasselbe als Markierung ausgebildete Strukturelement 13 des Tragelements 2 auf jedem der Bilder 8a, 9a dargestellt wird. Auf die selbe Weise kann die Position von auf einem Bild erkennbaren, als Lagemarkierungen ausgebildeten Strukturelementen 17 eines auf dem Druckprodukt 3 befindlichen Druckbildes in der Auswerteeinheit 20 identifiziert, mit vorgegebenen Sollwerten für die Position dieser Strukturelemente 17 verglichen und die Vergleichsergebnisse zur Steuerung der Weiterverarbeitung des Druckprodukts 3 verwendet werden. Je nach Lage der Bildaufzeichnungsmittel 8, 9 können diese Bilder 8a, 9a mit unterschiedlichen Vergrösserungsfaktoren aufgenommen werden.

Ein weiterer Aspekt der Erfindung bei der Auswertung von aufgenommenen Bildern 7a, 8a, 9a ist die unter Umständen auftretende Konstellation, dass Bauteile der Vorrichtung 1 im optischen Weg der Bildaufzeichnungsmittel 7, 8, 9 angeordnet sind. Beispielsweise könnte konstruktionsbedingt eine Haltestange für das Bildaufzeichnungsmittel 8 in dem vom weiter oben angeordneten Bildaufzeichnungsmittel 9 aufgenommenen Bild 9a auftauchen, was zu falschen Auswertungen seitens der Auswerteeinheit 20 führen kann. Sind also solche Bauteile bei der Aufnahme der Bilder 7a, 8a, 9a im optischen Weg eines der Bildaufzeichnungsmittel angeordnet und verdecken einen Teil des Bildes, so werden diese verdeckten Bereiche in der Auswerteeinheit 20 ausgeblendet. Der Begriff "ausgeblendet" ist im vorliegenden Zusammenhang im Sinne von "herausgerechnet" oder "ignoriert" zu verstehen.

In einem weiteren Aspekt der Erfindung löst mindestens eines der Bildaufzeichnungsmittel 7, 8, 9 die Aufnahme des mindestens einen Bildes 7a, 8a, 9a selbsttätig aus. In dieser Konstellation werden bevorzugt Videokameras verwendet, welche das Tragelement 2 bzw. einen Abschnitt des Tragelements 2 durchgehend filmen. Sobald ein Druckprodukt 3 im Bild erscheint, wird es durch nicht dargestellte Bilderkennungsmittel erkannt und es wird eine Momentaufnahme ausgelöst, welche an die Auswerteeinheit 20 geschickt wird. Dies ist einerseits vorteilhaft, da kein externer Auslöser für zum Aufnehmen der Bilder 7a, 8a, 9a benötigt wird, der je nach Frequenz der Ankunft der Druckprodukte 3 angepasst werden müsste, und andererseits da auch Bilder der transportierten Druckprodukte 3 aufgenommen werden können. Aus der Aufnahme aufeinanderfolgender, zeitversetzter Bilder 7a, 8a, 9a kann daher eine Transportgeschwindigkeit der Druckprodukte 3 ermittelt werden.

Fig. 4 zeigt eine Seitenansicht der zur Ermittlung eines Schattenprofils verwendeten Bauteile der Vorrichtung 1. In dieser Darstellung sind die Bildaufzeichnungsmittel 7, 8, 9 und weitere Bauteile der Vorrichtung 1 aus Klarheitsgründen weggelassen. Es sind lediglich der Querschnitt des Tragelements 2 und des darauf liegenden Druckprodukts 3, die dritte Lichtquelle 6, der Spiegel 11 und der zweite Anschlag 10b dargestellt. Bei der seitlich des Tragelements 2, im Wesentlichen in der Ebene des Auflagefläche 18 angeordneten, dritten Lichtquelle 6, ist der Spiegel 11 seitlich des Tragelements 2 gegenüber der dritten Lichtquelle 6 angeordnet, wie aus Fig. 4 ersichtlich. Aufgrund der mittels der dritten Lichtquelle 6 erfolgenden Beleuchtung des Druckprodukts 3 von der Seite des Tragelements 2 wird ein Schattenwurfprofil 30 erzeugt, welches durch eines der Bildaufzeichnungsmittel 7, 8, 9, vorzugsweise das Bildaufzeichnungsmittel 9, aufgenommen wird. Bei der dargestellten Anordnung werden die Lichtstrahlen 31 der dritten Lichtquelle 6 mittels des Spiegels 11 in Richtung des dritten Bildaufzeichnungsmittels 9, umgelenkt. Der Spiegel 11 ist in einem Winkel derart zum Tragelement 2 ausgerichtet, dass das dritte Bildaufzeichnungsmittel 9 eine Ebene des Druckprodukts 2 als eine Linie abbildet. Damit die Lichtstrahlen 31 den Spiegel 11 und damit das dritte Bildaufzeichnungsmittel 9 erreichen, ist der zweite Anschlag 10b transparent ausgeführt. Bei einer anderen Anordnung können die obigen Ausführungen für den ersten Anschlag 10a gelten. In einer hier nicht dargestellten alternativen Anordnung wird anstelle des Spiegels 11 ein Bildaufzeichnungsmittel so positioniert, dass es das Licht aus der dritten Lichtquelle 6 empfängt.

Bei Beleuchtung des Druckprodukts 3 von der Seite wird wie oben erwähnt ein Schattenwurfprofil 30 erzeugt. Damit empfängt das dritte Bildaufzeichnungsmittel 9 ein Bild, das im gezeigten Beispiel von Fig. 4 die Dicke des Druckprödukts 3 widerspiegelt. Dies ist einerseits vorteilhaft bei der Prüfung, ob das Druckprodukt 3 die geforderte Dicke aufweist und andererseits kann das Vorliegen von Unebenheiten bzw. von unerwünschten Strukturelementen, wie Farbtropfen oder Verschmutzungen auf der Oberfläche des Druckprodukts 3 detektiert werden. Dies geschieht indem die gemessene Dicke mit einer in der Auswerteeinheit 20 gespeicherten Solldicke verglichen wird. Ist die gemessene Dicke geringer als die Solldicke, so ist das ein Hinweis darauf, dass das Druckprodukt 3 aus einem zu dünnen, d.h. falschen Material hergestellt worden ist. Ist die gemessene Dicke grösser als die Solldicke, so könnte entweder das zur Herstellung des Druckprodukts verwendete Material zu dick sein, oder es könnten Unebenheiten vorliegen. Die Unebenheiten können entweder im Material des Druckprodukts 3 selbst vorliegen, oder es können Unebenheiten der Oberfläche des Tragelements 2 vorliegen oder es können Verunreinigungen auf der Oberfläche des Druckprodukts 3 vorliegen. Natürlich kann auch eine Kombination dieser Fehler vorliegen. Eine Unebenheit der Oberfläche des Tragelements 2 kann mittels einer ähnlichen Messung jedoch ohne aufliegendes Druckprodukt 3 detektiert werden. Eventuelle Verschmutzungen auf der Oberfläche des Druckprodukts 3 können mittels einer weiteren Prüfung festgestellt werden.

Bei der weiteren Prüfung wird bei Beleuchtung des Druckprodukts 3 im Wesentlichen von ausserhalb der Ebene der Auflagefläche 18 des Tragelements 2, also beispielsweise mittels der ersten Lichtquelle 4, ein daraus resultierender, hier nicht gezeigter Schattenwurf mit mindestens einem der übrigen Bildaufzeichnungsmittel 8, 9 aufgenommen. In diesem Zusammenhang soll der Unterschied zwischen Schattenwurf und Schattenwurfprofil erläutert werden. Wie oben erwähnt, stellt der Schattenwurf den Schatten eines Strukturelements auf der Oberfläche des Druckprodukts 3 oder des Tragelements 2 dar, welcher ein mehr oder weniger gestrecktes bzw. gestauchtes Abbild des Strukturelements auf der genannten Oberfläche ist. Das Schattenwurfprofil bezieht sich dagegen auf den Schatten, der bei einer seitlichen Beleuchtung entsteht und der das Profil eines Strukturelements bzw. einer Unebenheit abbildet.

Das aufgenommene Bild des Schattenwurfs wird an die Auswerteeinheit 20 übermittelt. In der Auswerteeinheit 20 wird daraus mindestens ein weiteres Geometrieobjekt berechnet, mit einem entsprechenden Sollwert verglichen und das Vergleichsergebnis zur Steuerung der Weiterverarbeitung des Druckprodukts 3 verwendet.

Fig. 5 zeigt eine Draufsicht auf ein Tragelement 2' für Druckprodukte 3, welches bei einer Vorrichtung 1 bevorzugt zum Zuführen und Abführen eines Druckprodukts 3, hier der Buchdecke, verwendet wird. Es umfasst ein Transportelement 41 mit einer dem Druckprodukt 3 zugewandten Auflagefläche 46 mit luftdurchlässigen Öffnungen 28, von denen beispielhaft lediglich vier Öffnungen dargestellt sind. Ferner ist eine mit den Öffnungen 28 in luftdurchlässiger Verbindung stehende Blaslufteinheit 48, eine mit den Öffnungen 28 in luftdurchlässiger Verbindung stehende Luftansaugeinheit 47 und ein mittels angetriebener Rollen 45 drehbares, vorzugsweise als Riemen ausgestaltetes Führungsband 44 vorgesehen. Dabei sind die Rollen 45 und das Führungsband 44 in einem durch einen Doppelpfeil dargestellten, veränderbaren Abstand 49 (Fig. 6) über den Öffnungen 28 angeordnet. Das Ensemble der Rollen 45 und des Führungsbands 44 ist an einem anhebbaren und/oder schwenkbaren Träger 42 befestigt.

Die Rollen 45 sind derart antreibbar, dass das Führungsband 44 sowohl in als auch entgegen der Transportrichtung 19 des Druckprodukts 3 bewegbar ist. Zum Unterbrechen der Bewegung des Führungsbands 44 sind die Rollen 45 anhaltbar ausgebildet.

Der Abstand 49 der Rollen 45 und des Führungsbands 44 von den Öffnungen 28 ist mittels des Trägers 42 veränderbar. Dabei kann der Träger derart ausgestaltet sein, dass er zum Anheben der Rollen 45 eine zur Auflagefläche 46 lotrechte Bewegung ausführt. Dies ist vorteilhaft, wenn die Dicke des zu untersuchenden Druckprodukts 3 variiert oder wenn ein Stapel von Druckprodukten zugeführt wird. Zusätzlich dazu oder optional können die Rollen 45 und das Führungsband 44 um eine nicht dargestellte Längsachse des Trägers 42 geschwenkt werden. Diese Ausführungsform ist besonders vorteilhaft wenn nach einer Fixierung des Druckprodukts 3 an der Auflagefläche 46 des Transportelements 41 eine Qualitätsprüfung durchgeführt werden soll. Aufgrund des Schwenkens der Rollen 45 und des Führungsbands 44 stören diese Bauteile der Vorrichtung 1 nicht bei der Aufnahme von Bildern 7a, 8a, 9a durch ein Bildaufzeichnungsmittel 7, 8, 9. Damit ist es auch nicht notwendig, in der Auswerteeinheit 20 anschliessend diese Bauteile auszublenden. Das trägt zur Qualität der Auswertung bei, da bei einer solchen Ausblendung zugehörige Bereiche der Fläche des Druckprodukts 3, welche sich unter dem verdeckenden Bauteil befunden haben, nicht rekonstruiert werden können. In einer anderen Ausführungsform können die Rollen 45 und das Führungsband 44 in eine Position seitlich der Auflagefläche 46 geschwenkt werden, was mit einem Doppelpfeil 43 grob angedeutet ist.

Natürlich kann das Tragelement 2' auch mit einem zweiten Führungsband mit zweiten Rollen versehen werden, was jedoch nicht dargestellt ist. Die zweiten Rollen können parallel oder quer zur Antriebsrichtung des ersten Bands angeordnet sein.

Vorzugsweise weisen das erste und/oder das zweite Führungsband eine derartige Oberflächenbeschaffenheit auf, dass eine Haftreibung mit einem Druckprodukt gewährleistet ist.

Im Folgenden wird eine mögliche Funktionsweise des Tragelements 2' mit Bezug auf Fig. 5 erläutert. Es wird dabei angenommen, dass das Druckprodukt 3 von der Blaslufteinheit 48 in Richtung der Luftansaugeiriheit 47, d.h. in Transportrichtung 19 gefördert wird. Wird ein auf dem Tragelement 2' ankommendes Druckprodukt 3 detektiert, was mittels dem Fachmann bekannten Detektoren, wie z. B. Infrarotdetektoren, stattfindet, so wird die Blaslufteinheit 48 aktiviert und das ankommende Druckprodukt angehoben, was in Fig. 6 durch Luftströmungspfeile 50 dargestellt ist. Damit wird also das Druckprodukt 3 gegen das Führungsband 44 gedrückt, welches in Transportrichtung 19 durch die Rollen 45 angetrieben wird. Das Führungsband 44 nimmt das Druckprodukt 3 anschliessend geführt mit. Sobald sich das Druckprodukt 3 an der für die Aufnahme eines Bildes vorgesehenen Stelle oberhalb der Auflagefläche 46 befindet wird die Blaslufteinheit 48 abgestellt und das Druckprodukt 3 fällt auf die Auflagefläche 46, wonach es durch Aktivierung der Luftansaugeinheit 47 angesaugt und dadurch an der Auflagefläche 46 fixiert wird. Durch eine präzise Steuerung der Blaslufteinheit 48 und der Luftansaugeinheit 47 kann sichergestellt werden, dass das Druckprodukt 3 tatsächlich an der dafür vorgesehenen Stelle der Auflagefläche 46 positioniert wird. Nach der Fixierung können die Rollen 45 und das Führungsband 44 weggeschwenkt werden, damit die Aufnahme eines Bildes des Druckprodukts 3 auf die im Zusammenhang mit Fig. 1 bis 4 erläuterte Weise stattfinden kann. Danach können die Rollen 45 zusammen mit dem Führungsband 44 wieder abgesenkt und die Blaslufteinheit 48 aktiviert werden. Dadurch kann das Druckprodukt 3 zu einer unmittelbar an die Auflagefläche 46 anschliessenden, hier nicht dargestellten Weiterverarbeitungsanlage befördert werden. Bei der Verwendung zweier Rollenpaare mit jeweils einem Führungsband, wie oben erläutert, kann bei Bedarf die Abtransportrichtung des Druckprodukts 3 geändert werden, indem beispielsweise die Rollen 45 mit dem Führungsband 44 das Druckprodukt 3 bei seiner Ankunft übernehmen und zweite Rollen mit einem zweiten Führungsband das Druckprodukt 3 bei seinem um beispielsweise 90° bezogen auf die bisherige Transportrichtung 19 des Druckprodukts 3 gedrehten Abtransport übernimmt. Es ist selbstverständlich denkbar, dass bei einer Ausführungsform mit seitlich schwenkbaren Rollenpaaren, wie oben für die Rollen 45 erläutert, der Winkel der Abtransportrichtung den gegebenen Anforderungen der Weiterverarbeitungsanlage anpassbar ist.

Zusammenfassend stellt die Erfindung vielfältige Möglichkeiten zur Qualitätsprüfung eines Druckprodukts 3 bereit. Dazu wird zusätzlich zu dem mindestens einen Strukturelement 3a, 3b, 3c, 3d, 3e, 3f, 3g, 3h, 15, 17 des Druckprodukts 3 auch mindestens ein Strukturelement 13 des Tragelements 2, 2 aufgenommen und aus dem mindestens einen Strukturelement 13 des Tragelements 2, 2' ein Geometrieobjekt des Tragelements 2, 2' ermittelt. Danach werden Istwerte des mindestens einen Geometrieobjekts des Tragelements 2, 2' mit vorgegebenen Sollwerten für dieses Geometrieobjekt verglichen werden, und schliesslich wird das Vergleichsergebnis zur Steuerung einer Weiterverarbeitung des Druckprodukts 3 verwendet.

Zudem können die aus den Strukturelementen 3a, 3b, 3c, 3d, 3e, 3f, 3g, 3h, 15, 17 des Druckprodukts 3 und aus den Strukturelementen 13 des Tragelements 2, 2' ermittelten Geometrieobjekte zueinander in Verbindung gesetzt und ein Ist-Winkel der Geometrieobjekte zueinander und/oder ein Ist-Abstand der Geometrieobjekte voneinander ermittelt werden. Der ermittelte Ist-Winkel und/oder Ist-Abstand wird mit einem vorgegebenen Soll-Winkel und/oder Soll-Abstand verglichen und schliesslich das Vergleichsergebnis zur Steuerung der Weiterverarbeitung des Druckprodukts 3 verwendet.

Auf diese Weise können Unebenheiten des Druckprodukts 3 oder der Auflagefläche 18 des Tragelements 2, sowie Artefakte und Verschmutzungen der Oberfläche des Druckprodukts 3 durch spezielle Beleuchtung und anschliessenden Aufnahmen mit den verschiedenen Bildaufzeichnungsmitteln 7, 8, 9 detektiert werden. Weiter kann die Dicke des Druckprodukts 3 durch Beleuchtung von der Seite und Aufnahme eines Schattenwurfprofils errechnet und ebenfalls mit Sollwerten verglichen werden. Ferner ist es möglich, die Lage der Ränder 3a, 3b, 3c, 3d des Druckprodukts 3, d.h. von weiteren Strukturelementen, zu ermitteln und dadurch beispielsweise den richtigen Beschnitt bzw. die richtige Ausrichtung des Druckprodukts 3 zu überprüfen. Weiter kann die Lage des Druckbilds des Druckprodukts 3 und/oder die Parallelität der Ränder 3a, 3b; 3c, 3d durch die Verwendung und Auswertung der Lage von als Markierungen ausgebildeten Strukturelementen 17, 13 auf dem Druckprodukt 3 und auf dem Tragelement 2 überprüft werden.

Obwohl vorteilhafte Ausführungsformen der Erfindung gezeigt und beschrieben wurden, ist die Erfindung nicht auf diese beschränkt, sondern sie kann im Rahmen des Geltungsbereiches der folgenden Ansprüche auf andere Weise ausgeführt und angewendet werden.

## Patentansprüche

1. Verfahren zur Qualitätsprüfung eines flächigen Druckprodukts (3), bei dem das Druckprodukt (3) zunächst auf ein Tragelement (2, 2') verbracht wird, das Druckprodukt (3) sowie das Tragelement (2, 2') anschliessend von mindestens einer Lichtquelle (4, 5, 6, 12) beleuchtet werden, danach durch mindestens ein Bildaufzeichnungsmittel (7, 8, 9) eine Aufnahme mindestens eines mindestens ein Strukturelement (3a, 3b, 3c, 3d, 3e, 3f, 3g, 3h, 15, 17) des Druckprodukts (3) aufweisenden Bildes (7a, 8a, 9a) des beleuchteten Druckprodukts (3) erfolgt, danach in einer Auswerteeinheit (20) aus dem mindestens einen Strukturelement (3a, 3b, 3c, 3d, 3e, 3f, 3g, 3h, 15, 17) mindestens ein Geometrieobjekt des Druckprodukts (3) ermittelt wird, danach Istwerte des mindestens einen Geometrieobjekts mit vorgegebenen Sollwerten für dieses Geometrieobjekt verglichen werden und schliesslich das Vergleichsergebnis zur Steuerung einer Weiterverarbeitung des Druckprodukts (3) verwendet wird, **dadurch gekennzeichnet, dass**
• zusätzlich zu dem mindestens einen Strukturelement (3a, 3b, 3c, 3d, 3e, 3f, 3g, 3h, 15, 17) des Druckprodukts (3) auch mindestens ein Strukturelement (13) des Tragelements (2, 2') aufgenommen und aus dem mindestens einen Strukturelement (13) des Tragelements (2, 2') ein Geometrieobjekt des Tragelements (2, 2') ermittelt wird,
• danach Istwerte des mindestens einen Geömetrieobjekts des Tragelements (2, 2') mit vorgegebenen Sollwerten für dieses Geometrieobjekt verglichen werden, und schliesslich
• das Vergleichsergebnis zur Steuerung einer Weiterverarbeitung des Druckprodukts (3) verwendet wird.

2. Verfahren nach Anspruch 1, **dadurch gekennzeichnet, dass** die aus den Strukturelementen (3a, 3b, 3c, 3d, 3e, 3f, 3g, 3h, 15, 17) des Druckprodukts (3) und aus den Strukturelementen (13) des Tragelements (2, 2') ermittelten Geometrieobjekte zueinander in Verbindung gesetzt und ein Ist-Winkel der Geometrieobjekte zueinander und/oder ein Ist-Abstand der Geometrieobjekte voneinander ermittelt wird und der ermittelte Ist-Winkel und/oder Ist-Abstand mit einem vorgegebenen Soll-Winkel und/oder Soll-Abstand verglichen wird und schliesslich das Vergleichsergebnis zur Steuerung der Weiterverarbeitung des Druckprodukts (3) verwendet wird.

3. Verfahren nach Anspruch 1 oder 2, **dadurch gekennzeichnet, dass** von dem mindestens einen auf dem Tragelement (2, 2') befindlichen Strukturelement (13) mittels des mindestens einen Bildaufzeichnungsmittels (7, 8, 9) ein Bild (7a, 8a, 9a) aufgenommen und an die Auswerteeinheit (20) übermittelt wird, wobei anschliessend in der Auswerteeinheit (20) mittels eines Vergleichs von aufgenommenen Abmessungen und aufgenommener Position mit absoluten Sollwerten dieses Strukturelements (13) ein Vergrösserungs- und Verzerrungsfaktor des mindestens einen Bildaufzeichnungsmittels (7, 8, 9) ermittelt wird.

4. Verfahren nach Anspruch 3, **dadurch gekennzeichnet, dass** unter Berücksichtigung des Vergrösserungs- und Verzerrungsfaktors Istwerte von Abmessungen und Position des mindestens einen Strukturelements (13) des Tragelements (2) bestimmt werden.

5. Verfahren nach einem der Ansprüche 1 bis 4, **dadurch gekennzeichnet,** das bei Beleuchtung des Druckprodukts (3) von der Seite des Tragelements (2, 2'), im Wesentlichen aus einer Ebene des Druckprodukts (3) heraus ein Schattenwurfprofil (30) mindestens eines Strukturelements (3e, 3f, 3g, 3h, 15, 17) des Druckprodukts (3) erzeugt und dieses Schattenwurfprofil (30), insbesondere mittels eines Spiegels (11), zum mindestens einen Bildaufzeichnungsmittel (7, 8, 9) weitergeleitet wird.

6. Verfahren nach einem der Ansprüche 1 bis 4, **dadurch gekennzeichnet, dass** bei Beleuchtung des Druckprodukts (3) im Wesentlichen von ausserhalb einer Ebene des Druckprodukts (3) ein Schattenwurf mindestens eines Strukturelements (3h, 15) des Druckprodukts (3) erzeugt und mit dem mindestens einen Bildaufzeichnungsmittel (7, 8, 9) aufgenommen, an die Auswerteeinheit (20) übermittelt und in der Auswerteeinheit (20) daraus mindestens ein weiteres Geometrieobjekt berechnet und zur Steuerung der Weiterverarbeitung des Druckprodukts (3) verwendet wird.

7. Verfahren nach einem der Ansprüche 1 bis 6, **dadurch gekennzeichnet, dass** mindestens zwei Bilder (7a, 8a, 9a) des Druckprodukts (3) sowie des Tragelements (2, 2') mit mindestens zwei unterschiedlichen Bildaufzeichnungsmitteln (7, 8, 9) aufgenommen werden, wobei mindestens ein und dasselbe Strukturelement (13) des Tragelements (2, 2') auf jedem der Bilder dargestellt wird.

8. Verfahren nach Anspruch 7, **dadurch gekennzeichnet, dass** die mindestens zwei unterschiedlichen Bildaufzeichnungsmittel (7, 8, 9) Bilder (7a, 8a, 9a) mit unterschiedlichen Vergrösserungsfaktoren machen.

9. Verfahren nach einem der Ansprüche 1 bis 8, **dadurch gekennzeichnet, dass** das mindestens eine Bildaufzeichnungsmittel (7, 8, 9) die Aufnahme des mindestens einen Bildes (7a, 8a, 9a) selbst auslöst.

10. Verfahren nach einem der Ansprüche 1 bis 9, **dadurch gekennzeichnet, dass** zeitversetzt aufeinanderfolgend Bilder (7a, 8a, 9a) mindestens eines Druckprodukts (3) aufgenommen werden und, dass aus den zeitversetzt aufeinanderfolgenden Bildern (7a, 8a, 9a) eine Transportgeschwindigkeit der Druckprodukte (3) ermittelt wird.

11. Verfahren nach einem der Ansprüche 1 bis 10, **dadurch gekennzeichnet, dass** das Druckprodukt (3) vor der Aufnahme des zumindest einen Bildes (7a, 8a, 9a) an das Tragelement (2, 2') angesaugt wird.

12. Vorrichtung zur Qualitätsprüfung eines flächigen Druckerprodukts mittels des Verfahrens nach einem der Ansprüche 1 bis 11, umfassend ein Tragelement (2, I 2') für das Druckprodukt (3), mindestens eine Lichtquelle (4), mindestens ein Bildaufzeichnungsmittel (7) und eine Auswerteeinheit (20), wobei das mindestens eine Bildaufzeichnungsmittel (7) und die Auswerteeinheit (20) dazu ausgestaltet sind, eine Aufnahme mindestens eines mindestens ein Strukturelement (3a, 3b, 3c, 3d, 3e, 3f, 3g, 3h, 15, 17) des Druckprodukts (3) aufweisenden Bildes (7a, 8a, 9a) des beleuchteten Druckprodukts (3) vorzunehmen, im aufgenommenen Bild (7a, 8a, 9a) aus dem mindestens einen Strukturelement (3a, 3b, 3c, 3d, 3e, 3f, 3g, 3h, 15, 17) mindestens ein Geometrieobjekt des Druckprodukts (3) zu ermitteln, Istwerte des mindestens einen Geometrieobjekts mit vorgegebenen Sollwerten für dieses Geometrieobjekt zu vergleichen und schliesslich das Vergleichsergebnis zur Steuerung einer Weiterverarbeitung des Druckprodukts (3) zu verwenden, **dadurch gekennzeichnet, dass** das mindestens eine Bildaufzeichnungsmittel (7) und die Auswerteeinheit (20) auch zum Aufnehmen mindestens eines Strukturelements (13) des Tragelements (2, 2'), zur Ermittlung eines Geometrieobjekts aus dem mindestens einen Strukturelement (13) des Tragelements (2, 2'), zum Vergleichen von Istwerten des mindestens einen Geometrieobjekts mit vorgegebenen Sollwerten für dieses Geometrieobjekt und schliesslich zum Verwenden des Vergleichsergebnisses zur Steuerung einer Weiterverarbeitung des Druckprodukts (3) ausgestaltet sind.

13. Vorrichtung nach Anspruch 12, **dadurch gekennzeichnet, dass** die Auswerteeinheit (20) dazu ausgestaltet ist, die aus den Strukturelementen (3a, 3b, 3c, 3d, 3e, 3f, 3g, 3h, 15, 17) des Druckprodukts (3) und aus den Strukturelementen (13) des Tragelements (2, 2') ermittelten Geometrieobjekte zueinander in Verbindung zu setzen und einen Ist-Winkel der Geometrieobjekte zueinander und/oder einen Ist-Abstand der Geometrieobjekte voneinander zu ermitteln und den ermittelten Ist-Winkel und/oder Ist-Abstand mit einem vorgegebenen Soll-Winkel und/oder Soll-Abstand zu vergleichen und schliesslich das Vergleichsergebnis zur Steuerung der Weiterverarbeitung des Druckprodukts (3) zu verwenden.

14. Vorrichtung nach Anspruch 12 oder 13, **dadurch gekennzeichnet, dass** die erste Lichtquelle (4) sowie mindestens das erste Bildaufzeichnungsmittel (7), bezogen auf die Ebene einer Auflagefläche (18, 46) des Druckprodukts (3) auf dem Tragelement (2, 2'), auf der gleichen Seite des Tragelements (2, 2') angeordnet sind.

15. Vorrichtung nach einem der Ansprüche 12 bis 14, **dadurch gekennzeichnet, dass** das Tragelement (2, 2') mindestens ein Strukturelement (13) aufweist, dessen Form und Position auf dem Tragelement (2, 2') in der Auswerteeinheit (20) gespeichert sind.

16. Vorrichtung nach einem der Ansprüche 12 bis 15, **dadurch gekennzeichnet, dass** das Tragelement (2') als Förderelement ausgebildet ist.

17. Vorrichtung nach einem der Ansprüche 12 bis 16, **dadurch gekennzeichnet, dass** mindestens eine zweite Lichtquelle (5) auf einer Seite des Tragelements (2, 2') angeordnet ist, welche der Seite des Tragelements (2, 2') auf der die erste Lichtquelle (4) angeordnet ist, gegenüberliegt.

18. Vorrichtung nach einem der Ansprüche 12 bis 17, **dadurch gekennzeichnet, dass** mindestens eine dritte Lichtquelle (6), bezogen auf die Ebene der Auflagefläche (18) des Druckprodukts (3) auf dem Tragelement (2, 2'), auf derselben Seite der ersten Lichtquelle (4) und in einer Ebene rechtwinklig zur Ebene der Auflagefläche (18) angeordnet ist.

19. Vorrichtung nach einem der Ansprüche 12 bis 18, **dadurch gekennzeichnet, dass** bei einer seitlich des Tragelements (2, 2'), im Wesentlichen in einer Ebene des Druckprodukts (3) angeordneten, dritten Lichtquelle (6), ebenfalls seitlich des Tragelements (2, 2') und gegenüber der dritten Lichtquelle (6) ein Spiegel (11) angeordnet ist.

20. Vorrichtung nach Anspruch 19, **dadurch gekennzeichnet, dass** der Spiegel (11) in einem Winkel derart zum Tragelement (2, 2') ausgerichtet ist, dass das dritte Bildaufzeichnungsmittel (9) die Ebene des Druckprodukts (3) als eine Linie abbildet.

21. Vorrichtung nach einem der Ansprüche 12 bis 20, **dadurch gekennzeichnet, dass** ein erster, insbesondere transparenter, Anschlag (10a) an einer ersten Kante (16a) des Tragelements (2, 2') angeordnet ist, wobei die erste Kante (16a) gegenüber einer zweiten Kante (16b) des Tragelements (2, 2') angeordnet ist, welche zweite Kante (16b) als erstes vom Druckprodukt (3) bei seiner Ankunft auf dem Tragelement (2, 2') passiert wird.

22. Vorrichtung nach Anspruch 21, **dadurch gekennzeichnet, dass** ein zweiter, insbesondere transparenter, Anschlag (10b) vorgesehen ist, welcher an einer der ersten und der zweiten Kante (16a, 16b) benachbarten, dritten Kante (16c) des Tragelements (2, 2') angeordnet ist, wobei die dritte Kante (16c) bei einer von einer horizontalen Ebene abweichenden Schräglage des Tragelements (2, 2') diejenige ist, welche sich in Richtung des sich infolge seiner Gewichtskraft auf der Auflagefläche (18, 46) bewegenden Druckprodukts (3) befindet.

23. Vorrichtung nach einem der Ansprüche 12 bis 22, **dadurch gekennzeichnet, dass** mindestens zwei Bildaufzeichnungsmittel (7, 9) vorgesehen sind, welche jeweils ein Bild (7a, 9a) des Druckprodukts (3) und des Tragelements (2, 2') aufnehmen, wobei sich die Bilder (7a, 9a) der mindestens zwei Bildaufzeichnungsmittel (7, 9) voneinander unterscheiden und derart überschneiden, dass ein und dasselbe Strukturelement (13) des Tragelements (2, 2') auf jedem der beiden Bilder (7a, 9a) sichtbar ist und insbesondere dass die Bilder (7a, 9a) mindestens gemeinsam das vollständige Druckprodukt (3) abbilden.

24. Vorrichtung nach einem der Ansprüche 12 bis 23, **dadurch gekennzeichnet, dass** das Tragelement (2, 2') transparent ist und insbesondere eine Lichtdiffusor-Schicht aufweist.

25. Tragelement (2') zum Zuführen und Abführen eines Druckprodukts (3), insbesondere in einer Vorrichtung (1) nach einem der Ansprüche 12 bis 24, umfassend ein Transportelement (41) mit einer dem Druckprodukt (3) zugewandten Auflagefläche (46) mit luftdurchlässigen Öffnungen (28), eine mit den Öffnungen (28) in luftdurchlässiger Verbindung stehende Blaslufteinheit (48), eine mit den Öffnungen (28) in luftdurchlässiger Verbindung stehende Luftansaugeinheit (47) und ein mittels angetriebenen Rollen (45) drehbares Führungsband (44), wobei die Rollen (45) und das Führungsband (44) in einem veränderbaren Abstand über den Öffnungen (28) angeordnet sind.

26. Tragelement nach Anspruch 25, **dadurch gekennzeichnet, dass** die Rollen (45) derart antreibbar sind, dass das Führungsband (44) in einer Transportrichtung (19) des Druckprodukts (3) und entgegen der Transportrichtung (19) des Druckprodukts (3) bewegbar ist und zum Anhalten der Bewegung des Führungsbands (44) die Rollen (45) anhaltbar sind.

27. Tragelement nach Anspruch 25 oder 26, dadurch gekennzeichet dass der Abstand der Rollen (45) und des Führungsbands (44) von den Öffnungen (28) mittels eines Trägers (42) veränderbar ist, insbesondere dass die Rollen (45) und das Führungsband (44) mittels des Trägers (42) seitlich der mit den Öffnungen (28) versehenen Auflagefläche (46) schwenkbar sind.

## Claims

1. Method of checking the quality of a flat printed product (3) wherein the printed product (3) is first of all placed on a support element (2, 2'), then the printed product (3) and support element (2, 2') are illuminated with at least one light source (4, 5, 6, 12), then at least one image (7a, 8a, 9a) of the illuminated printed product (3) comprising at least one structural element (3a, 3b, 3c, 3d, 3e, 3f, 3g, 3h, 15, 17) of the printed product (3) is recorded with at least one image recording means (7, 8, 9), then at least one geometrical feature of the printed product (3) is determined from the at least one structural element (3a, 3b, 3c, 3d, 3e, 3f, 3g, 3h, 15, 17) in an evaluation unit (20), then actual values of the at least one geometrical feature are compared with set values for said geometrical feature, and lastly the result of the comparison is used to control further processing of the printed product (3), **characterized in that**
□ in addition to the at least one structural element (3a, 3b, 3c, 3d, 3e, 3f, 3g, 3h, 15, 17) of the printed product (3), at least one structural element (13) of the support element (2, 2') is recorded and a geometrical feature of the support element (2, 2') is determined from the at least one structural element (13) of the support element (2, 2'),
□ then actual values of the at least one geometrical feature of the support element (2, 2') are compared with set values for said geometrical feature, and lastly
□ the result of the comparison is used to control further processing of the printed product (3).

2. Method according to Claim 1, **characterized in that** the geometrical features determined from the structural elements (3a, 3b, 3c, 3d, 3e, 3f, 3g, 3h, 15, 17) of the printed product (3) and from the structural elements (13) of the support element (2, 2') are correlated, and an actual angle and/or distance between the geometrical features is (or are) determined and the actual angle and/or distance determined is (or are) compared with a set angle and/or distance, and lastly the result of the comparison is used to control further processing of the printed product (3).

3. Method according to Claim 1 or Claim 2, **characterized in that** an image (7a, 8a, 9a) of the least one structural element (13) located on the support element (2, 2') is recorded with the at least one image recording means (7, 8, 9) and transmitted to the evaluation unit (20), a magnification and distortion factor of the at least one image recording means (7, 8, 9) then being determined in the evaluation unit (20) by comparison of recorded dimensions and recorded position with absolute set values of said structural element (13).

4. Method according to Claim 3, **characterized in that** actual values of dimensions and position of the at least one structural element (13) of the support element (2) are determined with due allowance for the magnification and distortion factor.

5. Method according to any one of Claims 1 to 4, **characterized in that** upon illumination of the printed product (3) from one side of the support element (2, 2'), a silhouette (30) of at least one structural element (3e, 3f, 3g, 3h, 15, 17) of the printed product (3) is produced essentially from a plane of the printed product (3), and this silhouette (30) is conveyed to the at least one image recording means (7, 8, 9), in particular by means of a mirror (11).

6. Method according to any one of Claims 1 to 4, **characterized in that** upon illumination of the printed product (3) essentially from outside a plane of the printed product (3), a silhouette of at least one structural element (3h, 15) of the printed product (3) is produced, recorded with the at least one image recording means (7, 8, 9), and transmitted to the evaluation unit (20), and a further geometrical feature is calculated therefrom in the evaluation unit (20) and is used to control further processing of the printed product (3).

7. Method according to any one of Claims 1 to 6, **characterized in that** at least two images (7a, 8a, 9a) of the printed product (3) and of the support element (2, 2') are recorded with at least two different image recording means (7, 8, 9), at least one given structural element (13) of the support element (2, 2') appearing in both (or all) such images.

8. Method according to Claim 7, **characterized in that** the at least two different image recording means (7, 8, 9) make images (7a, 8a, 9a) with different magnification factors.

9. Method according to any one of Claims 1 to 8, **characterized in that** the at least one image recording means (7, 8, 9) itself triggers the recording of the at least one image (7a, 8a, 9a).

10. Method according to any one of Claims 1 to 9, **characterized in that** a sequence of images (7a, 8a, 9a) of at least one printed product (3) is recorded and a transfer speed of the printed products (3) is determined from the sequence of images (7a, 8a, 9a).

11. Method according to any one of Claims 1 to 10, **characterized in that** the printed product (3) is held on the support element (2, 2') by suction prior to the recording of the at least one image (7a, 8a, 9a).

12. Apparatus for checking the quality of a flat printed product (3) by the method according to any one of Claims 1 to 11, comprising a support element (2, 2') for the printed product (3), at least one light source (4), at least one image recording means (7), and an evaluation unit (20), wherein the at least one image recording means (7) and the evaluation unit (20) are configured to record at least one image (7a, 8a, 9a) of the illuminated printed product (3) comprising at least one structural element (3a, 3b, 3c, 3d, 3e, 3f, 3g, 3h, 15, 17) of the printed product (3); to determine at least one geometrical feature of the printed product (3) in the recorded image (7a, 8a, 9a) from the at least one structural element (3a, 3b, 3c, 3d, 3e, 3f, 3g, 3h, 15, 17); to compare actual values of the at least one geometrical feature with set values for said geometrical feature; and lastly to use the result of the comparison to control further processing of the printed product (3), **characterized in that** the at least one image recording means (7) and the evaluation unit (20) are also configured to record at least one structural element (13) of the support element (2, 2'); to determine a geometrical feature from the at least one structural element (13) of the structural element (2, 2'); to compare actual values of the at least one geometrical feature with set values for said geometrical feature; and lastly to use the result of the comparison to control further processing of the printed product (3).

13. Apparatus according to Claim 12, **characterized in that** the evaluation unit (20) is configured to correlate the geometrical features determined from the structural elements (3a, 3b, 3c, 3d, 3e, 3f, 3g, 3h, 15, 17) of the printed product (3) and from the structural elements (13) of the support element (2, 2'); to determine an actual angle and/or distance between the geometrical features, and to compare the determined actual angle and/or distance with a set angle and/or distance; and lastly to use the result of the comparison to control further processing of the printed product (3).

14. Apparatus according to Claim 12 or Claim 13, **characterized in that** the first light source (4) and at least the first image recording means (7) are arranged on the same side of the support element (2, 2') with respect to the plane of a bearing surface (18, 46) of the printed product (3) on the support element (2, 2').

15. Apparatus according to any one of Claims 12 to 14, **characterized in that** the support element (2, 2') has at least one structural element (13) whose form and position on the support element (2, 2') are stored in the evaluation unit (20).

16. Apparatus according to any one of Claims 12 to 15, **characterized in that** the support element (2') is configured as a transfer element.

17. Apparatus according to any one of Claims 12 to 16, **characterized in that** at least one second light source (5) is arranged on the side of the support element (2, 2') opposite the side of the support element (2, 2') on which the first light source (4) is arranged.

18. Apparatus according to any one of Claims 12 to 17, **characterized in that** at least one third light source (6) is arranged on the same side [as] the first light source (4) with respect to the plane of the bearing surface (18) of the printed product (3) on the support element (2, 2'), in a plane at right angles to the plane of the bearing surface (18).

19. Apparatus according to any one of Claims 12 to 18, **characterized in that** with a third light source (6) arranged to one side of the support element (2, 2') and substantially in a plane of the printed product (3), a mirror (11) is also arranged to one side of the support element (2, 2'), opposite the third light source (6).

20. Apparatus according to Claim 19, **characterized in that** the mirror (11) is set at an angle to the support element (2, 2') such that the third image recording means (9) maps the plane of the printed product (3) as a line.

21. Apparatus according to any one of Claims 12 to 20, **characterized in that** a first, in particular transparent, stop (10a) is arranged at a first edge (16a) of the support element (2, 2'), said first edge (16a) being arranged opposite a second edge (16b) of the support element (2, 2'), said second edge (16b) being the first edge to be passed by the printed product (3) upon its arrival at the support element (2, 2').

22. Apparatus according to Claim 21, **characterized in that** a second, in particular transparent, stop (10b) is provided, arranged at a third edge (16c) of the support element (2, 2') adjacent to the first and second edges (16a, 16b), said third edge (16c) being - in cases where the plane of the support element (2, 2') is tilted out of horizontal - the edge towards which the printed product (3) moves across the bearing surface (18, 46) under its own weight.

23. Apparatus according to any one of Claims 12 to 22, **characterized in that** at least two image recording means (7, 9) are provided, each of which records an image (7a, 9a) of the printed product (3) and of the support element (2, 2'), the images (7a, 9a) of the at least two image recording means (7, 9) being different yet overlapping so that a given structural element (13) of the support element (2, 2') is visible in both images (7a, 9a), and in particular so that the images (7a, 9a), at least when combined, map the whole of the printed product (3).

24. Apparatus according to any one of Claims 12 to 23, **characterized in that** the support element (2, 2') is transparent and in particular has a light-diffuser layer.

25. Support element (2') for feeding and removing a printed product (3), in particular in an apparatus (1) according to any one of Claims 12 to 24, comprising a transfer element (41) with a bearing surface (46) with pneumatic orifices (28) facing towards the printed product (3), an air blower unit (48) in pneumatic communication with the orifices (28), an air suction unit (47) in pneumatic communication with the orifices (28), and a leading belt (44) propelled by driven pulleys (45), the pulleys (45) and the leading belt (44) being arranged at a variable distance above the orifices (28).

26. Support element according to Claim 25, **characterized in that** the pulleys (45) are drivable so that the guide belt (44) can be propelled in a transfer direction (19) of the printed product (3) and the opposite way to the transfer direction (19) of the printed product (3), and the pulleys (45) are stoppable to arrest the motion of the guide belt (44).

27. Support element according to Claim 25 or Claim 26, **characterized in that** the distance of the pulleys (45) and guide belt (44) from the orifices (28) can be varied by means of a beam (42), and in particular **in that** by means of the beam (42) the pulleys (45) and guide belt (44) can be laterally swung clear of the bearing surface (46) provided with orifices (28).

## Revendications

1. Procédé de contrôle de la qualité d'un produit d'impression plat (3), selon lequel on place d'abord le produit d'impression (3) sur un élément porteur (2, 2'), on éclaire ensuite le produit d'impression (3) et l'élément porteur (2, 2') par au moins une source lumineuse (4, 5, 6, 12), puis un enregistrement d'au moins une image (7a, 8a, 9a) du produit d'impression éclairé (3), présentant au moins un élément structurel (3a, 3b, 3c, 3d, 3e, 3f, 3g, 3h, 15, 17) du produit d'impression (3), est effectué par au moins un moyen (7, 8, 9) d'enregistrement d'images, puis au moins un objet géométrique du produit d'impression (3) est déterminé dans une unité d'évaluation (20) à partir de l'élément structurel au moins unique (3a, 3b, 3c, 3d, 3e, 3f, 3g, 3h, 15, 17), puis on compare des valeurs réelles de l'objet géométrique au moins unique à des valeurs de consigne prédéfinies pour cet objet géométrique, et enfin on utilise le résultat de la comparaison pour commander la suite du traitement du produit d'impression (3), **caractérisé en ce que**
- en plus de l'élément structurel au moins unique (3a, 3b, 3c, 3d, 3e, 3f, 3g, 3h, 15, 17) du produit d'impression (3), on enregistre également au moins un élément structurel (13) de l'élément porteur (2, 2'), et on détermine un objet géométrique de l'élément porteur (2, 2') à partir de l'élément structurel au moins unique (13) de l'élément porteur (2, 2'),
- puis on compare des valeurs réelles de l'objet géométrique au moins unique de l'élément porteur (2, 2') à des valeurs de consigne prédéfinies pour cet objet géométrique,
- et enfin on utilise le résultat de la comparaison pour commander la suite du traitement du produit d'impression (3).

2. Procédé selon la revendication 1, **caractérisé en ce que** les objets géométriques déterminés à partir des éléments structurels (3a, 3b, 3c, 3d, 3e, 3f, 3g, 3h, 15, 17) du produit d'impression (3) et à partir des éléments structurels (13) de l'élément porteur (2, 2') sont mutuellement associés et on détermine un angle réel entre les objets géométriques et/ou une distance réelle entre les objets géométriques, et l'angle réel et/ou la distance réelle déterminé(e) est comparé(e) à un angle de consigne et/ou à une distance de consigne prédéfini(e), et enfin on utilise le résultat de la comparaison pour commander la suite du traitement du produit d'impression (3).

3. Procédé selon la revendication 1 ou 2, **caractérisé en ce qu'**on enregistre à l'aide du moyen au moins unique (7, 8, 9) d'enregistrement d'images une image (7a, 8a, 9a) de l'élément structurel au moins unique (13) se trouvant sur l'élément porteur (2, 2') et on la transmet à l'unité d'évaluation (20), sachant qu'ensuite, dans l'unité d'évaluation (20), au moyen d'une comparaison de dimensions enregistrées et d'une position enregistrée avec des valeurs de consigne absolues de cet élément structurel (13), on détermine un facteur d'agrandissement et de distorsion du moyen au moins unique (7, 8, 9) d'enregistrement d'images.

4. Procédé selon la revendication 3, **caractérisé en ce qu'**on détermine des valeurs réelles de dimensions et de position de l'élément structurel au moins unique (13) de l'élément porteur (2) en tenant compte du facteur d'agrandissement et de distorsion.

5. Procédé selon l'une des revendications 1 à 4, **caractérisé en ce que**, en éclairant le produit d'impression (3) par le côté de l'élément porteur (2, 2'), pour l'essentiel à partir d'un plan du produit d'impression (3), on produit un profil de projection d'ombre (30) d'au moins un élément structurel (3e, 3f, 3g, 3h, 15, 17) du produit d'impression (3) et ce profil de projection d'ombre (30) est transmis, en particulier au moyen d'un miroir (11), au moyen au moins unique (7, 8, 9) d'enregistrement d'images.

6. Procédé selon l'une des revendications 1 à 4, **caractérisé en ce que**, en éclairant le produit d'impression (3) pour l'essentiel de l'extérieur d'un plan du produit d'impression (3), on produit une projection d'ombre d'au moins un élément structurel (3h, 15) du produit d'impression (3) et on l'enregistre avec le moyen au moins unique (7, 8, 9) d'enregistrement d'images, on la transmet à l'unité d'évaluation (20) et, dans l'unité d'évaluation (20), on calcule à partir de cela au moins un objet géométrique supplémentaire et on l'utilise pour commander la suite du traitement du produit d'impression (3).

7. Procédé selon l'une des revendications 1 à 6, **caractérisé en ce qu'**on enregistre au moins deux images (7a, 8a, 9a) du produit d'impression (3) et de l'élément porteur (2, 2') avec au moins deux moyens différents (7, 8, 9) d'enregistrement d'images, sachant qu'au moins un seul et même élément structurel (13) de l'élément porteur (2, 2') est représenté sur chacune des images.

8. Procédé selon la revendication 7, **caractérisé en ce que** les au moins deux moyens différents (7, 8, 9) d'enregistrement d'images réalisent des images (7a, 8a, 9a) avec des facteurs d'agrandissement différents.

9. Procédé selon l'une des revendications 1 à 8, **caractérisé en ce que** le moyen au moins unique (7, 8, 9) d'enregistrement d'images déclenche lui-même l'enregistrement de l'image au moins unique (7a, 8a, 9a).

10. Procédé selon l'une des revendications 1 à 9, **caractérisé en ce qu'**on enregistre successivement avec un décalage dans le temps des images (7a, 8a, 9a) d'au moins un produit d'impression (3) et **en ce que**, à partir des images (7a, 8a, 9a) se succédant avec un décalage dans le temps, on détermine une vitesse de transport des produits d'impression (3).

11. Procédé selon l'une des revendications 1 à 10, **caractérisé en ce que** le produit d'impression (3) est aspiré sur l'élément porteur (2, 2') avant l'enregistrement de l'image au moins unique (7a, 8a, 9a).

12. Dispositif de contrôle de la qualité d'un produit d'impression plat (3) au moyen du procédé selon l'une des revendications 1 à 11, comprenant un élément porteur (2, 2') pour le produit d'impression (3), au moins une source lumineuse (4), au moins un moyen (7) d'enregistrement d'images et une unité d'évaluation (20), sachant que le moyen au moins unique (7) d'enregistrement d'images et l'unité d'évaluation (20) sont conçus pour effectuer un enregistrement d'au moins une image (7a, 8a, 9a) du produit d'impression éclairé (3), présentant au moins un élément structurel (3a, 3b, 3c, 3d, 3e, 3f, 3g, 3h, 15, 17) du produit d'impression (3), pour déterminer dans l'image enregistrée (7a, 8a, 9a), à partir de l'élément structurel au moins unique (3a, 3b, 3c, 3d, 3e, 3f, 3g, 3h, 15, 17), au moins un objet géométrique du produit d'impression (3), pour comparer des valeurs réelles de l'objet géométrique au moins unique à des valeurs de consigne prédéfinies pour cet objet géométrique, et enfin pour utiliser le résultat de la comparaison pour commander la suite du traitement du produit d'impression (3), **caractérisé en ce que** le moyen au moins unique (7) d'enregistrement d'images et l'unité d'évaluation (20) sont également conçus pour enregistrer au moins un élément structurel (13) de l'élément porteur (2, 2'), pour déterminer un objet géométrique à partir de l'élément structurel au moins unique (13) de l'élément porteur (2, 2'), pour comparer des valeurs réelles de l'objet géométrique au moins unique à des valeurs de consigne prédéfinies pour cet objet géométrique, et enfin pour utiliser le résultat de la comparaison pour commander la suite du traitement du produit d'impression (3).

13. Dispositif selon la revendication 12, **caractérisé en ce que** l'unité d'évaluation (20) est conçue pour associer mutuellement les objets géométriques déterminés à partir des éléments structurels (3a, 3b, 3c, 3d, 3e, 3f, 3g, 3h, 15, 17) du produit d'impression (3) et à partir des éléments structurels (13) de l'élément porteur (2, 2') et pour déterminer un angle réel entre les objets géométriques et/ou une distance réelle entre les objets géométriques, et pour comparer l'angle réel et/ou la distance réelle déterminé(e) à un angle de consigne et/ou à une distance de consigne prédéfini(e), et enfin pour utiliser le résultat de la comparaison pour commander la suite du traitement du produit d'impression (3).

14. Dispositif selon la revendication 12 ou 13, **caractérisé en ce que** la première source lumineuse (4) ainsi qu'au moins le premier moyen (7) d'enregistrement d'images sont disposés, par rapport au plan d'une surface (18, 46) de pose du produit d'impression (3) sur l'élément porteur (2, 2'), sur le même côté de l'élément porteur (2, 2').

15. Dispositif selon l'une des revendications 12 à 14, **caractérisé en ce que** l'élément porteur (2, 2') présente au moins un élément structurel (13) dont la forme et la position sur l'élément porteur (2, 2') sont enregistrées dans l'unité d'évaluation (20).

16. Dispositif selon l'une des revendications 12 à 15, **caractérisé en ce que** l'élément porteur (2') est conçu comme élément de convoyage.

17. Dispositif selon l'une des revendications 12 à 16, **caractérisé en ce qu'**au moins une deuxième source lumineuse (5) est disposée sur un côté de l'élément porteur (2, 2') qui est opposé au côté de l'élément porteur (2, 2') sur lequel est disposée la première source lumineuse (4).

18. Dispositif selon l'une des revendications 12 à 17, **caractérisé en ce qu'**au moins une troisième source lumineuse (6) est disposée, par rapport au plan de la surface (18) de pose du produit d'impression (3) sur l'élément porteur (2, 2'), sur le même côté que la première source lumineuse (4) et dans un plan perpendiculaire au plan de la surface de pose (18).

19. Dispositif selon l'une des revendications 12 à 18, **caractérisé en ce que**, dans le cas d'une troisième source lumineuse (6) disposée sur le côté de l'élément porteur (2, 2'), pour l'essentiel dans un plan du produit d'impression (3), un miroir (11) est également disposé sur le côté de l'élément porteur (2, 2') et en vis-à-vis de la troisième source lumineuse (6).

20. Dispositif selon la revendication 19, **caractérisé en ce que** le miroir (11) est orienté par rapport à l'élément porteur (2, 2') sous un angle tel que le troisième moyen (9) d'enregistrement d'images reproduit le plan du produit d'impression (3) sous la forme d'une ligne.

21. Dispositif selon l'une des revendications 12 à 20, **caractérisé en ce qu'**une première butée (10a), en particulier transparente, est disposée sur une première arête (16a) de l'élément porteur (2, 2'), sachant que la première arête (16a) est disposée en vis-à-vis d'une deuxième arête (16b) de l'élément porteur (2, 2'), laquelle deuxième arête (16b) est passée la première par le produit d'impression (3) lors de son arrivée sur l'élément porteur (2, 2').

22. Dispositif selon la revendication 21, **caractérisé en ce qu'**il est prévu une deuxième butée (10b), en particulier transparente, qui est disposée sur une troisième arête (16c) de l'élément porteur (2, 2') voisine de la première arête (16a) et de la deuxième arête (16b), sachant que la troisième arête (16c), dans une position oblique de l'élément porteur (2, 2') s'écartant d'un plan horizontal, est celle qui se trouve dans la direction du produit d'impression (3) se déplaçant sur la surface de pose (18, 46) du fait de sa force massique.

23. Dispositif selon l'une des revendications 12 à 22, **caractérisé en ce qu'**il est prévu au moins deux moyens (7, 9) d'enregistrement d'images qui enregistrent chacun une image (7a, 9a) du produit d'impression (3) et de l'élément porteur (2, 2'), sachant que les images (7a, 9a) des au moins deux moyens (7, 9) d'enregistrement d'images sont différentes entre elles et se recoupent de telle sorte qu'un seul et même élément structurel (13) de l'élément porteur (2, 2') est visible sur chacune des deux images (7a, 9a), et en particulier que les images (7a, 9a) reproduisent au moins ensemble le produit d'impression complet (3).

24. Dispositif selon l'une des revendications 12 à 23, **caractérisé en ce que** l'élément porteur (2, 2') est transparent et présente en particulier une couche de diffuseur de lumière.

25. Élément porteur (2') pour apporter et évacuer un produit d'impression (3), en particulier dans un dispositif (1) selon l'une des revendications 12 à 24, comprenant un élément de transport (41) avec une surface de pose (46) tournée vers le produit d'impression (3) et pourvue d'ouvertures (28) laissant passer l'air, une unité d'air de soufflage (48) se trouvant en liaison pneumatique avec les ouvertures (28), une unité d'aspiration d'air (47) se trouvant en liaison pneumatique avec les ouvertures (28) et une bande de guidage (44) rotative au moyen de rouleaux entraînés (45), sachant que les rouleaux (45) et la bande de guidage (44) sont disposés à une distance variable au-dessus des ouvertures (28).

26. Élément porteur selon la revendication 25, **caractérisé en ce que** les rouleaux (45) peuvent être entraînés de telle sorte que la bande de guidage (44) peut être déplacée dans une direction de transport (19) du produit d'impression (3) et à l'encontre de la direction de transport (19) du produit d'impression (3), et que les rouleaux (45) peuvent être arrêtés afin d'arrêter le déplacement de la bande de guidage (44).

27. Élément porteur selon la revendication 25 ou 26, **caractérisé en ce que** la distance des rouleaux (45) et de la bande de guidage (44) par rapport aux ouvertures (28) peut être modifiée au moyen d'un support (42), en particulier **en ce que** les rouleaux (45) et la bande de guidage (44) peuvent, au moyen du support (42), être pivotés latéralement à la surface de pose (46) pourvue des ouvertures (28).
